# FASCICULE DE BREVET EUROPEEN

(11) **EP 1 907 281 B1**
(45) Date de publication et mention de la délivrance du brevet: **07.03.2018**
(21) Numéro de dépôt: 06778864.6
(22) Date de dépôt: 07.07.2006
(51) Int. Cl.: B64D 13/08, F02C 7/18, F02C 7/20, F28D 7/10

(54) **ENSEMBLE PROPULSEUR POUR AERONEF ET AERONEF COMPORTANT AU MOINS UN TEL ENSEMBLE PROPULSEUR**
ANTRIEBSEINHEIT FÜR FLUGZEUG UND MINDESTENS EINE SOLCHE ANTRIEBSVORRICHTUNG UMFASSENDES FLUGZEUG
PROPULSION UNIT FOR AIRCRAFT AND AIRCRAFT COMPRISING AT LEAST ONE SUCH PROPULSION UNIT

(30) Priorité: 28.07.2005 FR 0552352
(43) Date de publication de la demande: 09.04.2008
(73) Titulaire: AIRBUS OPERATIONS (S.A.S), 31060 Toulouse (FR)
(72) Inventeur: MARTINOU, Jean-Marc, F-31240 L'Union (FR); MARCHE, Hervé, F-31120 ROQUETTES (FR)
(74) Mandataire: Gicquel, Olivier Yves Gérard
(86) Numéro de dépôt international: PCT/FR2006/001695
(87) Numéro de publication internationale: WO 2007/012722

(56) Documents cités:
- EP-A- 0 469 825
- EP-A- 0 888 966
- US-A- 4 971 137
- US-A- 5 729 969
- US-A1- 2003 218 096

## Description

L'invention concerne un ensemble propulseur pour aéronef comportant un turboréacteur et un échangeur thermique. Plus précisément, l'invention traite du cheminement de l'air de refroidissement et de l'air chaud jusqu'à l'échangeur thermique dans lequel lesdits flux sont destinés à circuler. L'invention concerne également une position de l'échangeur thermique par rapport au turboréacteur.

Il est connu, pour alimenter le circuit de conditionnement d'air de la cabine pressurisée dans laquelle se trouvent l'équipage et les passagers d'un aéronef, de prélever de l'air comprimé au niveau des compresseurs des turboréacteurs dudit aéronef. Cet air comprimé est acheminé par des conduits depuis les turboréacteurs jusqu'au circuit de conditionnement d'air de la cabine pressurisée. Cependant, dans la mesure où la température de l'air prélevé au niveau des compresseurs du turboréacteur est très élevée, généralement supérieure à 400°C, il est impératif de refroidir préalablement cet air comprimé.

Pour cela, il est connu d'utiliser un échangeur thermique permettant de refroidir au moins partiellement l'air comprimé prélevé au niveau d'un compresseur du turboréacteur avant de l'injecter dans le circuit de conditionnement d'air. L'échangeur thermique comporte un boîtier dans lequel un flux d'air chaud, provenant du compresseur du turboréacteur, croise un flux d'air de refroidissement, prélevé dans le canal de soufflante du turboréacteur. L'air froid prélevé dans le canal de soufflante du turboréacteur a une température avoisinant les 70°C à 100°C. Lors du croisement des flux, il y a un échange calorifique permettant, au sortir du boîtier de l'échangeur thermique, d'obtenir un air comprimé suffisamment refroidi, c'est-à-dire ayant une température d'environ 200°C. Le flux d'air chaud refroidi est alors dirigé vers le circuit de conditionnement d'air, tandis que le flux d'air de refroidissement est évacué hors du turboréacteur par des ouïes ménagées sur le capot du mât réacteur, ou mât de fixation du turboréacteur à la voilure de l'aéronef. Un échangeur thermique selon l'art antérieur est connu par le document US 2003/0218096. Un des inconvénients de l'échangeur thermique est son encombrement. En effet, l'échangeur thermique est le plus souvent disposé au niveau du mât permettant de relier le turboréacteur à une aile de la voilure de l'aéronef. Généralement, l'échangeur thermique est solidarisé à une face supérieure du mât. Plus précisément, l'échangeur thermique est monté au-dessus de la partie avant du caisson formant la structure rigide du mât, et à l'intérieur du carénage recouvrant ledit caisson. Il est donc nécessaire d'amener le flux d'air chaud, devant être refroidi, et le flux d'air de refroidissement, permettant de refroidir le flux d'air chaud, depuis le turboréacteur situé sous le mât, jusqu'à l'échangeur thermique situé au dessus le mât.

Actuellement, du fait de la position de l'échangeur thermique sur le mât et du prélèvement de l'air froid et de l'air chaud dans le turboréacteur, les conduits d'arrivée d'air chaud et d'air de refroidissement transitent tous les deux par le caisson du mât. Le caisson du mât est une structure travaillante du mât, qui est affaiblit au niveau du passage des conduits à travers sa structure. Par ailleurs, l'encombrement des conduits dans le volume interne du caisson est important, imposant des croisements desdits conduits dans le caisson. De tels croisements peuvent rendre difficile le montage des conduits d'arrivée d'air de refroidissement et d'air chaud sur le turboréacteur et l'échangeur thermique.

Par ailleurs, l'air froid est actuellement prélevé latéralement sur le turboréacteur, au niveau du canal de soufflante, de sorte que le conduit d'arrivée d'air de refroidissement, permettant d'amener le flux d'air de refroidissement depuis le turboréacteur jusqu'à l'échangeur thermique, doit traverser le capot d'un inverseur de poussée du turboréacteur. Or, le capot de l'inverseur de poussée a une cinématique dans la mesure où il peut avoir une position fermée et une position ouverte. Ainsi, lorsque le capot de l'inverseur de poussée est ouvert, la liaison entre le conduit d'arrivée d'air de refroidissement et le capot de l'inverseur ne peut pas se faire. Il est donc nécessaire de prévoir un système de liaison avec un joint pour que l'accouplement sans fuite entre le conduit d'arrivée d'air de refroidissement et le capot de l'inverseur puisse se faire.

L'invention a donc pour objet de fournir une alternative aux ensembles propulseurs existants, en modifiant la trajectoire des flux d'air froid et d'air chaud en direction de l'échangeur thermique. Ainsi, on évite de fragiliser la structure du caisson du mât et on simplifie le montage de l'échangeur thermique sur le mât et sur le turboréacteur.

Pour cela, dans l'invention, il est préconisé de faire pénétrer le flux d'air chaud et le flux d'air froid de face dans le boîtier de l'échangeur thermique. Par de face, on entend frontalement, face à l'écoulement de l'air situé hors de l'échangeur. Non seulement le flux d'air chaud, mais également le flux d'air froid qui habituellement pénètre par en dessous dans le boîtier, pénètrent par l'avant dans le boîtier. Le boîtier de l'échangeur est orienté par rapport à l'axe du turboréacteur de manière à présenter deux faces à l'avant du turboréacteur, afin que le conduit d'arrivée d'air froid et le conduit d'arrivée d'air chaud puissent pénétrer de face dans l'échangeur thermique. Par avant, on entend par rapport au sens d'écoulement de l'air à l'extérieur du boîtier. Le flux d'air froid et le flux d'air chaud circulent perpendiculairement l'un à l'autre dans le boîtier. Dans un exemple particulier, le flux d'air froid, destiné à circuler dans l'échangeur thermique, est prélevé non plus au niveau du canal de soufflante, mais au niveau d'une bifurcation qui sépare le flux d'air pénétrant dans le turboréacteur, en deux flux longeant respectivement le flanc gauche et le flanc droit du mât réacteur, en amont du canal de soufflante. Cette bifurcation, ou carénage de séparation, est formée d'un bord d'attaque fixe, c'est-à-dire sans aucune cinématique. Le conduit d'arrivée d'air froid peut donc également être fixe au niveau de la prise d'air située dans ladite bifurcation. Le prélèvement de l'air ne se fait donc plus latéralement, d'un côté ou de l'autre des capots du turboréacteur, mais de manière frontale, parallèlement à l'axe du turboréacteur. Le conduit d'arrivée d'air froid arrive de face sur le boîtier et ne traverse pas le caisson du mât.

L'invention a donc pour objet un ensemble propulseur pour aéronef selon la revendication 1. Selon des exemples de réalisation de l'ensemble propulseur selon l'invention, ledit ensemble peut comporter tout ou partie des caractéristiques supplémentaires suivantes :
- le boîtier de l'échangeur est solidarisé à une face supérieure d'un mât de fixation du turboréacteur à la voilure de l'aéronef.
- le flux d'air de refroidissement est prélevé dans une zone de bifurcation de circulation de l'air à l'intérieur des capots du turboréacteur, en amont des capots d'inverseur dudit turboréacteur.
- le boîtier est un parallélépipède s'étendant selon l'axe du turboréacteur et disposé en biais par rapport audit axe, le flux d'air de refroidissement pénétrant par une première face d'entrée avant dans le boîtier et sortant par une première face de sortie arrière dudit boîtier, le flux d'air chaud pénétrant par une deuxième face d'entrée avant du boîtier et sortant par une deuxième face de sortie arrière du boîtier.
- le flux d'air de refroidissement et le flux d'air chaud circulent d'avant en arrière dans le boîtier, perpendiculairement l'un à l'autre.
- le boîtier est un parallélépipède s'étendant transversalement par rapport à l'axe du turboréacteur, le flux d'air de refroidissement pénétrant par une face d'entrée inférieure dans le boîtier et sortant par une face de sortie supérieure dudit boîtier, le flux d'air chaud pénétrant par une face d'entrée avant du boîtier et sortant par une face de sortie arrière dudit boîtier.
- le flux d'air de refroidissement circule de bas en haut dans le boîtier, le flux d'air chaud circulant d'avant en arrière dans ledit boîtier, le flux d'air de refroidissement et le flux d'air chaud circulant perpendiculairement l'un à l'autre dans le boîtier.

L'invention concerne également un aéronef comportant au moins un ensemble propulseur selon l'invention.

Selon des exemples préférés de réalisation, l'aéronef est muni de deux ou quatre ensembles propulseur selon l'invention.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1A : une vue de dessus d'un ensemble propulseur selon un premier exemple de réalisation de l'invention ;
- Figure 1B : une représentation schématique en perspective de l'échangeur thermique selon la figure 1A ;
- Figure 2A : une vue de dessus d'un ensemble propulseur selon un deuxième exemple de réalisation de l'invention ;
- Figure 2B : une représentation schématique en perspective de l'échangeur thermique selon la figure 2A.

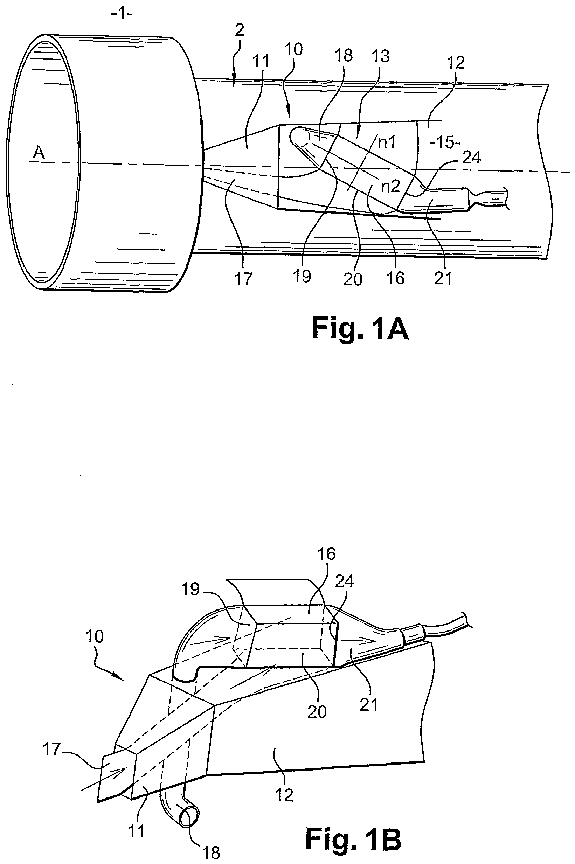

Sur la figure 1A est représenté un turboréacteur 1, dépourvu de nacelle. Un mât 10 permet de fixer le turboréacteur 1 à la voilure d'un aéronef (non représentée). Une extrémité en pyramide 11 du mât 10 est fixée à l'arrière de la soufflante 3 du turboréacteur 1. Un corps 12, ou caisson, du mât 10 est, quant à lui, fixé en deux points au moteur 2 du turboréacteur 1.

Un échangeur thermique 13 est solidarisé à une face supérieure 15 du caisson 12 du mât 10. Par face supérieure 15, on entend la face du mât 10 dirigée vers le ciel. L'échangeur thermique 13 comporte un boîtier 16 dans lequel un flux d'air de refroidissement et un flux d'air chaud circulent, afin de refroidir l'air chaud qui doit être envoyé vers un circuit de conditionnement d'air de l'aéronef. L'échangeur thermique 13 comporte également des conduits d'arrivée d'air 17, 18 amenant les flux d'air dans le boîtier 16, et des moyens d'évacuation d'air permettant aux flux d'air de sortir dudit boîtier 16.

Le flux d'air de refroidissement transite depuis la soufflante 3 jusqu'au boîtier 16 par un conduit d'arrivée d'air de refroidissement 17 et ressort hors du turboréacteur 1 par exemple par des ouïes ménagées sur la nacelle dudit turboréacteur 1. Le flux d'air chaud transite depuis le moteur 2 jusqu'au boîtier 16 par un conduit d'arrivée d'air chaud 18 traversant le caisson 12 du mât 10 dans sa hauteur. Les conduits d'arrivée d'air chaud 18 et d'air de refroidissement 17 ne se croisent pas puisque le conduit d'arrivée d'air de refroidissement 17 traverse la pyramide 11 du mât 10, tandis que le conduit d'arrivée d'air chaud 18 traverse le caisson 12 (Figure 1B).

Le boîtier 16 a une forme générale rectangulaire et est disposé en biais par rapport à l'axe A du turboréacteur 1 de manière à présenter deux faces avant, formant respectivement les faces d'entrée d'air de refroidissement 19 et d'air chaud 20. Les faces d'entrée d'air de refroidissement 19 et d'air chaud 20 ont des normales n1 et n2 inclinées par rapport à l'axe A du turboréacteur 1. Chaque conduit d'arrivée d'air 17, 18 pénètre dans le boîtier 16 par une face avant 19, 20 différente dudit boîtier 16, de sorte que les conduits d'arrivée d'air 17, 18 ne se croisent pas non plus au niveau du boîtier 16.

A l'intérieur du boîtier 16, le flux d'air de refroidissement provenant de la conduite d'arrivée d'air de refroidissement 17 et le flux d'air chaud provenant de la conduite d'arrivée d'air chaud 18 circulent d'avant en arrière par rapport au sens d'avancement de l'aéronef. A l'intérieur du boîtier 16, les flux d'air de refroidissement et d'air chaud circulent dans des plans horizontaux, parallèles les uns aux autres, mais dans des directions perpendiculaires l'une à l'autre. Ainsi, l'échangeur thermique 13 travaille horizontalement.

Le flux d'air chaud partiellement refroidi ressort du boîtier 16 par un conduit d'évacuation de l'air chaud 21, au niveau d'une face de sortie arrière 24 du boîtier 16, afin d'être emmené vers un circuit de conditionnement d'air (non représenté). Avantageusement, le flux d'air de refroidissement sortant du boîtier 16 est évacué par une seconde face de sortie arrière dudit boîtier 16, vers l'extérieur, afin de pouvoir être éjecté aisément hors du mât réacteur.

Dans un autre exemple de réalisation de l'invention, le boîtier 16 de l'échangeur thermique 13 peut avoir une forme générale en losange, ledit losange s'étendant le long de l'axe A du turboréacteur 1. Ainsi, le boîtier 16 présente là encore deux faces d'entrée d'air avant, permettant de recevoir le conduit d'arrivée d'air de refroidissement 17 et le conduit d'arrivée d'air chaud 18.

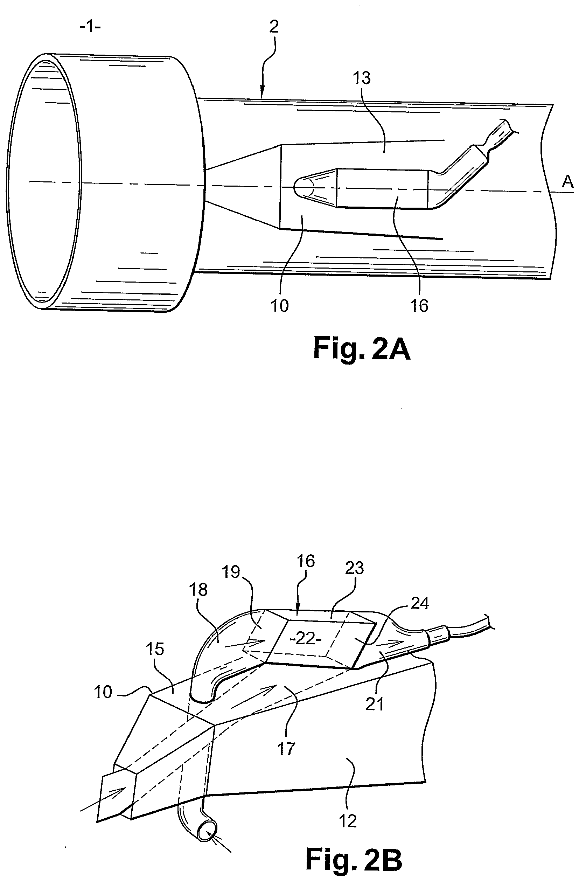

Sur la figure 2A est représenté un autre exemple de positionnement de l'échangeur thermique 13 sur le mât 10. Le boîtier 16 a une forme générale rectangulaire.

Comme cela est visible sur la figure 2B, le boîtier 16 est incliné sur le mât 12, et s'étend transversalement par rapport à l'axe A du turboréacteur 1. La face inférieure 22 du boîtier 16 n'est pas solidaire de la face supérieure 15 du mât 10, mais s'étend en biais au dessus de ladite face supérieure 15. Par face inférieure 22, on entend la face du boîtier 16 dirigée vers la face supérieure 15 du mât 10. Le boîtier 16 est par exemple solidarisé à la face supérieure 15 du mât 10 par une arête commune à la face inférieure 22 et à la face arrière du boîtier 16.

L'inclinaison du boîtier 16 est telle qu'elle dégage un accès à la face inférieure 22 dudit boîtier 16. La face inférieure 22 est donc à l'avant du turboréacteur 1, au même titre que la face avant 19, qui se trouve surélevée sur le mât 10 par rapport à la face inférieure 22. Les faces inférieure 22 et avant 19 sont face à l'écoulement de l'air situé hors de l'échangeur. La face inférieure 22 et la face avant 19 ont des normales inclinées par rapport à l'axe A du turboréacteur 1.

Le flux d'air de refroidissement pénètre par la face inférieure 22 dans le boîtier 16, tandis que le flux d'air chaud pénètre par la face avant 19 dans ledit boîtier 16. Le flux d'air de refroidissement traverse le boîtier 16 depuis la face d'entrée inférieure 22 jusqu'à la face de sortie supérieure 23, tandis que le flux d'air chaud traverse le boîtier 16 depuis la face d'entrée avant 19 jusqu'à la face de sortie arrière 24 dudit boîtier 16. Ainsi, le flux d'air de refroidissement traverse le boîtier perpendiculairement par rapport au flux d'air chaud. L'échangeur thermique 13 travaille donc verticalement.

## Revendications

1. Ensemble propulseur pour aéronef comportant un turboréacteur (1) et un échangeur thermique (13) situé au-dessus de la partie avant d'un caisson (12) formant la structure rigide d'un mât (10) de fixation du turboréacteur à la voilure de l'aéronef et prélevant un flux d'air de refroidissement et un flux d'air chaud dans le turboréacteur, **caractérisé en ce que** :
- le flux d'air de refroidissement entre dans un boîtier (16) de l'échangeur thermique par un conduit d'arrivée d'air de refroidissement (17),
- le flux d'air chaud entre dans le boîtier (16) par un conduit d'arrivée d'air chaud (18), et
- les faces d'entrée du flux d'air de refroidissement et du flux d'air chaud dans le boîtier (16) sont dirigées vers l'avant du turboréacteur et ont des normales (n1, n2) inclinées par rapport à l'axe (A) du turboréacteur.

2. Ensemble propulseur selon la revendication 1, **caractérisé en ce que** le flux d'air de refroidissement est prélevé dans la zone de bifurcation (6) de circulation de l'air à l'intérieur des capots du turboréacteur, en amont des capots d'inverseur (5) dudit turboréacteur.

3. Ensemble propulseur selon l'une des revendications 1 à 2, **caractérisé en ce que** le boîtier (16) de l'échangeur thermique est solidarisé à une face supérieure (15) d'un mât (10) de fixation du turboréacteur à la voilure de l'aéronef.

4. Ensemble propulseur selon l'une des revendications 1 à 3, **caractérisé en ce que** le boîtier est un parallélépipède s'étendant selon l'axe du turboréacteur et disposé en biais par rapport audit axe, le flux d'air de refroidissement pénétrant par une première face d'entrée avant (19) dans le boîtier et sortant par une première face de sortie (24) arrière dudit boîtier, le flux d'air chaud pénétrant par une deuxième face d'entrée avant (20) du boîtier et sortant par une deuxième face de sortie arrière du boîtier.

5. Ensemble propulseur selon la revendication 4, **caractérisé en ce que** le flux d'air de refroidissement et le flux d'air chaud circulent d'avant en arrière dans le boîtier, perpendiculairement l'un à l'autre.

6. Ensemble propulseur selon l'une des revendications 1 à 3, **caractérisé en ce que** le boîtier est un parallélépipède s'étendant transversalement par rapport à l'axe du turboréacteur, le flux d'air de refroidissement pénétrant par une face d'entrée inférieure (22) dans le boîtier et sortant par une face de sortie supérieure (23) dudit boîtier, le flux d'air chaud pénétrant par une face d'entrée avant (19) du boîtier et sortant par une face de sortie arrière (24) dudit boîtier.

7. Ensemble propulseur selon la revendication 6, **caractérisé en ce que** le flux d'air de refroidissement circule de bas en haut dans le boîtier, le flux d'air chaud circulant d'avant en arrière dans ledit boîtier, le flux d'air de refroidissement et le flux d'air chaud circulant perpendiculairement l'un à l'autre dans le boîtier.

8. Aéronef, **caractérisé en ce qu'**il comporte au moins un ensemble propulseur selon l'une des revendications 1 à 7.

## Patentansprüche

1. Antriebseinheit für Luftfahrzeug, umfassend ein Turbostrahltriebwerk (1) und einen Wärmetauscher (13), welcher sich oberhalb des vorderen Teils eines Kastens (12) befindet, welcher die starre Struktur eines Masts (10) zur Befestigung des Turbostrahltriebwerks an das Tragwerk des Luftfahrzeugs bildet, und einen Kühlluftstrom und einen Heißluftstrom in dem Turbostrahltriebwerk abzweigt, **dadurch gekennzeichnet, dass**:
- der Kühlluftstrom durch einen Eingangskanal für Kühlluft (17) in ein Gehäuse (16) des Wärmetauschers gelangt,
- der Heißluftstrom durch einen Eingangskanal für Heißluft (18) in das Gehäuse (16) gelangt, und
- die Flächen zum Eintreten des Kühlluftstroms und des Heißluftstroms in das Gehäuse (16) in Richtung auf den vorderen Teil des Turbostrahltriebwerks gerichtet sind und Normale (n1, n2) aufweisen, welche in Bezug auf eine Achse (A) des Turbostrahltriebwerks geneigt sind.

2. Antriebseinheit nach Anspruch 1, **dadurch gekennzeichnet, dass** der Kühlluftstrom in dem Verzweigungsbereich (6) zur Zirkulation der Luft im Inneren der Hauben des Turbostrahltriebwerks stromaufwärts der Umkehrhauben (5) des Turbostrahltriebwerks abgezweigt wird.

3. Antriebseinheit nach einem der Ansprüche 1 bis 2, **dadurch gekennzeichnet, dass** das Gehäuse (16) des Wärmetauschers fest mit einer oberen Fläche (15) eines Masts (10) zur Befestigung des Turbostrahltriebwerks an das Tragwerk des Luftfahrzeugs verbunden ist.

4. Antriebseinheit nach einem der Ansprüche 1 bis 3, **dadurch gekennzeichnet, dass** das Gehäuse ein Parallelepiped ist, welcher sich entlang der Achse des Turbostrahltriebwerks erstreckt und in Bezug auf die Achse schräg angeordnet ist, wobei der Kühlluftstrom durch eine erste vordere Eintrittsfläche (19) in das Gehäuse eindringt und durch eine erste hintere Austrittsfläche (24) des Gehäuses austritt, wobei der Heißluftstrom durch eine zweite vordere Eintrittsfläche (20) des Gehäuses eindringt und durch eine zweite hintere Austrittsfläche des Gehäuses austritt.

5. Antriebseinheit nach Anspruch 4, **dadurch gekennzeichnet, dass** der Kühlluftstrom und der Heißluftstrom in dem Gehäuse von vorne nach hinten, senkrecht zueinander strömen.

6. Antriebseinheit nach einem der Ansprüche 1 bis 3, **dadurch gekennzeichnet, dass** das Gehäuse ein Parallelepiped ist, welcher sich entlang der Achse des Turbostrahltriebwerks erstreckt, wobei der Kühlluftstrom durch eine untere Eintrittsfläche (22) in das Gehäuse eindringt und durch eine obere Austrittsfläche (23) des Gehäuses austritt, wobei der Heißluftstrom durch eine vordere Eintrittsfläche (19) des Gehäuses eindringt und durch eine hintere Austrittsfläche (24) des Gehäuses austritt.

7. Antriebseinheit nach Anspruch 6, **dadurch gekennzeichnet, dass** der Kühlluftstrom in dem Gehäuse von unten nach oben strömt, wobei der Heißluftstrom in dem Gehäuse von vorne nach hinten strömt, wobei der Kühlluftstrom und der Heißluftstrom in dem Gehäuse senkrecht zueinander strömen.

8. Luftfahrzeug, **dadurch gekennzeichnet, dass** es mindestens eine Antriebseinheit nach einem der Ansprüche 1 bis 7 umfasst.

## Claims

1. Propulsive assembly for aircraft comprising a jet engine (1) and a heat exchanger (13) situated above the front part of a box (12) forming the rigid structure of a pylon (10) for fixing the jet engine to the airfoil of the aircraft and taking a flow of cooling air (7) and a flow of hot air from the jet engine, **characterized in that**:
- the flow of cooling air enters into the housing (16) of the heat exchanger through a cooling air intake duct (17),
- the flow of hot air enters into the housing (16) through a hot air intake duct (18), and
- the inlet faces for the flow of cooling air and the flow of hot air into the housing (16) are directed towards the front of the jet engine and have normals (n1, n2) that are inclined relative to the axis (A) of the jet engine.

2. Propulsive assembly according to Claim 1, **characterized in that** the flow of cooling air is taken from the bifurcation zone (6) for circulating the air inside the cowls of the jet engine, upstream of the reverser cowls (5) of said jet engine.

3. Propulsive assembly according to either of Claims 1 and 2, **characterized in that** the housing (16) of the heat exchanger is joined to a top face (15) of a strut (10) for fixing the jet engine to the wings of the aircraft.

4. Propulsive assembly according to one of Claims 1 to 3, **characterized in that** the housing is parallelepipedal, extending along the axis of the jet engine and positioned at an angle relative to said axis, the flow of cooling air entering via a first front inlet face (19) into the housing and leaving via a first rear outlet face (24) of said housing, the flow of hot air entering via a second front inlet face (20) of the housing and leaving via a second rear outlet face of the housing.

5. Propulsive assembly according to Claim 4, **characterized in that** the flow of cooling air and the flow of hot air circulate from front to back inside the housing, perpendicularly to each other.

6. Propulsive assembly according to one of Claims 1 to 3, **characterized in that** the housing is parallelepipedal, extending transversely relative to the axis of the jet engine, the flow of cooling air entering via a bottom inlet face (22) into the housing and leaving via a top outlet face (23) of said housing, the flow of hot air entering via a front inlet face (19) of the housing and leaving via a rear outlet face (24) of said housing.

7. Propulsive assembly according to Claim 6, **characterized in that** the flow of cooling air circulates from bottom to top inside the housing, the flow of hot air circulating from front to back inside said housing, the flow of cooling air and the flow of hot air circulating perpendicularly to each other inside the housing.

8. Aircraft, **characterized in that** it comprises at least one propulsive assembly according to one of Claims 1 to 7.
